# EUROPÄISCHE PATENTSCHRIFT

(11) **EP 3 335 301 B1**
(45) Veröffentlichungstag und Bekanntmachung des Hinweises auf die Patenterteilung: **22.04.2020**
(21) Anmeldenummer: 16729922.1
(22) Anmeldetag: 17.06.2016
(51) Int. Cl.: H02K 3/487, H02K 11/02, H02K 3/42, H02K 3/40

(54) **STATOR EINER ELEKTRISCHEN MASCHINE**
STATOR OF AN ELECTRIC MACHINE
STATOR D'UNE MACHINE ÉLECTRIQUE

(30) Priorität: 14.08.2015 DE 102015215588
(43) Veröffentlichungstag der Anmeldung: 20.06.2018
(73) Patentinhaber: Robert Bosch GmbH, 70442 Stuttgart (DE)
(72) Erfinder: ELSER, Armin, 73553 Alfdorf-Brech (DE); REITER, Jochen, 71336 Waiblingen (DE); LANGE, Fabian, 30175 Hannover (DE); GREMMEL, Daniel, 31249 Hohenhameln (DE); HORN, Johannes, 30173 Hannover (DE)
(86) Internationale Anmeldenummer: PCT/EP2016/064101
(87) Internationale Veröffentlichungsnummer: WO 2017/028993

(56) Entgegenhaltungen:
- WO-A1-2005/004309
- GB-A- 2 268 337
- JP-A- S51 121 106
- JP-A- 2001 268 827
- JP-A- 2006 262 545
- JP-U- S5 163 102
- US-A- 5 979 087

## Beschreibung

### Stand der Technik

Die Erfindung geht aus von einem Stator einer elektrischen Maschine nach der Gattung des Hauptanspruchs.

Es ist schon ein Rotor einer elektrischen Maschine aus der DE 10 2010 042 175 A1 bekannt, mit einem eine Rotorachse aufweisenden Rotorblechpaket und mit im Rotorblechpaket vorgesehenen Nuten, in denen elektrische Leiter einer elektrischen Wicklung angeordnet sind und die jeweils von einem Nutverschlusselement verschlossen sind, das jeweils ein elektrisch isolierendes Trägerelement und ein auf dem Trägerelement angeordnetes Abschirmelement aus elektrisch leitendem Material umfasst. Nachteilig ist, dass die Ausgestaltung des Nutverschlusselements geometrisch sehr komplex ist. Dies führt zu erhöhten Fertigungskosten sowie zur Notwendigkeit einer individuellen Anpassung des Nutverschlusselements an die jeweilige Nutform. Die Isolierung des elektrisch leitenden Materials dient ausschließlich der Isolation gegenüber der elektrischen Wicklung.

Motoren mit elektrostatischer Abschirmung in den Wicklungsnuten sind auch aus JP2006262545 und US5779087 bekannt. Vorteile der Erfindung

Die Erfindung wird in Anspruch 1 definiert. Der erfindungsgemäße Stator mit den Merkmalen des Oberbegriffs des Hauptanspruchs bietet die Möglichkeit, dass der jeweils in den Nuten für das Nutverschlusselement benötigte Bauraum verringert wird, indem das Abschirmelement eine Beschichtung, eine Lackschicht, eine Folie oder ein Blech ist.

In einer ersten Alternative der Erfindung ist auf zumindest einem der Nutverschlusselemente jeweils eine Vielzahl von Abschirmelementen in axialer Richtung bezüglich der Statorachse hintereinander angeordnet, die elektrisch voneinander getrennt und jeweils an wenigstens einer Seite mit dem Statorblechpaket elektrisch verbunden sind. Dies hat den Vorteil, dass die Abschirmelemente die Lamellen des Statorblechpakets nicht über die gesamte Länge der Nut bzw. des Statorblechpakets kurzschließen, sondern nur über einen begrenzten axialen Abschnitt, so dass der durch magnetische Feldinduktion entstehende parasitäre Strom in axialer Richtung ausreichend klein gehalten wird. Außerdem sind die Abschirmelemente trotz der zwischen den Abschirmelementen gebildeten Unterbrechungen großflächig auf dem Trägerelement ausgeführt, so dass die Abschirmwirkung durch die Unterbrechungen nur unwesentlich vermindert wird. In einer zweiten Alternative der Erfindung ist auf zumindest einem der Nutverschlusselemente jeweils ein einziges, streifenförmiges Abschirmelement vorgesehen, das eine quer zur axialen Richtung gemessene Breite aufweist, die jeweils kleiner ist als die Breite einer Nutöffnung der zugehörigen Nut, und das über zumindest einen Steg mit dem Statorblechpaket elektrisch verbunden ist. Dies hat den Vorteil, dass das Abschirmelement die Lamellen des Statorblechpakets nicht über die gesamte Länge der Nut bzw. des Statorblechpakets kurzschließt, sondern nur im Bereich des zumindest einen Steges des Abschirmelementes. Dadurch wird der durch magnetische Feldinduktion entstehende parasitäre Strom in axialer Richtung fast vollständig unterdrückt. Die Fläche des Abschirmelements ist bei dem zweiten Ausführungsbeispiel wegen der fehlenden Unterbrechungen größer als bei dem ersten Ausführungsbeispiel, so dass auch hier die Abschirmwirkung hinreichend gegeben ist. Durch die in den Unteransprüchen aufgeführten Maßnahmen sind vorteilhafte Weiterbildungen und Verbesserungen des im Hauptanspruch angegebenen Stators möglich.

Sehr vorteilhaft ist es, wenn die Nuten jeweils einen Nutgrund und eine dem Nutgrund abgewandte Nutöffnung aufweisen, wobei das Abschirmelement jeweils in der Nutöffnung oder im Bereich unmittelbar unterhalb der Nutöffnung angeordnet ist.

Besonders vorteilhaft ist, wenn das zumindest eine Abschirmelement jeweils auf sein Trägerelement aufgeklebt, aufgeschweißt, auflackiert, aufgespritzt, aufgetropft oder aufgedampft ist. Auf diese Weise lassen sich die Abschirmelemente besonders einfach auf die Nutverschlusselemente aufbringen. Insbesondere das Auflackieren, Auftropfen oder Aufdampfen ist eine Ausführungsform, die auch ein nachträgliches Aufbringen der Abschirmelemente auf die Nutverschlusselemente ermöglicht, also nachdem die elektrischen Leiter und die Nutverschlusselemente bereits in die Nuten eingebracht sind.

Weiterhin vorteilhaft ist, wenn das zumindest eine Abschirmelement jeweils aus Aluminium, Kupfer, Silber oder Gold hergestellt ist und/oder jeweils als ein Lack ausgebildet ist.

### Zeichnung

Drei Ausführungsbeispiele der Erfindung sind in der Zeichnung vereinfacht dargestellt und in der nachfolgenden Beschreibung näher erläutert.
- Fig.1: zeigt eine Schnittansicht des erfindungsgemäßen Stators nach einem ersten Ausführungsbeispiel,
- Fig.2: eine Draufsicht auf eine der Nuten des erfindungsgemäßen Stators nach Fig.1,
- Fig.3: eine Draufsicht auf eine der Nuten des erfindungsgemäßen Stators nach Fig.1 gemäß einem zweiten Ausführungsbeispiel,
- Fig.4: eine Schnittansicht des erfindungsgemäßen Stators nach einem dritten Ausführungsbeispiel,
- Fig.5: eine Draufsicht auf eine der Nuten des erfindungsgemäßen Stators nach Fig.4.

### Beschreibung der Ausführungsbeispiele

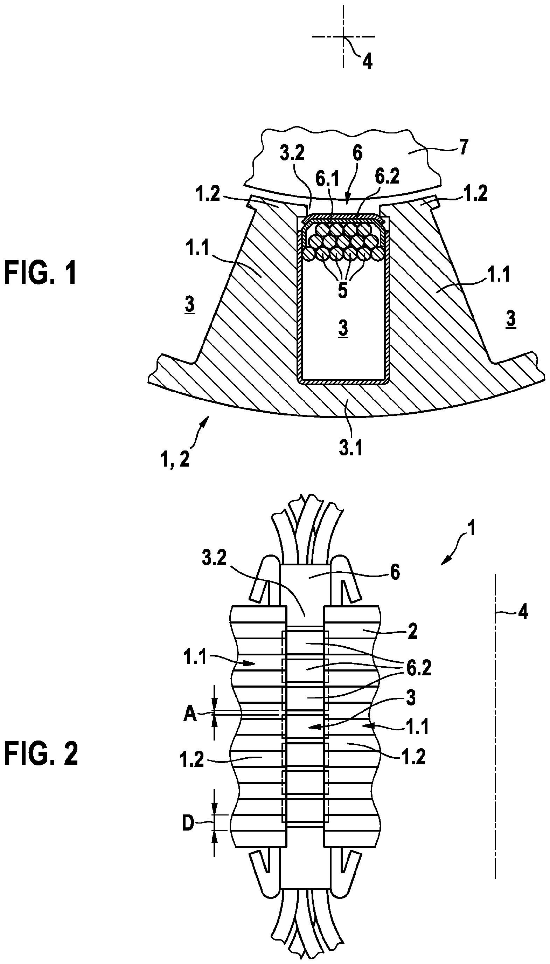

Fig.1 zeigt eine Schnittansicht eines erfindungsgemäßen Stators 1 einer elektrischen Maschine nach einem ersten Ausführungsbeispiel.

Der Stator 1 weist ein Statorblechpaket 2 und im Statorblechpaket 2 vorgesehene Nuten 3 auf, die beispielsweise in Richtung einer Statorachse 4 des Statorblechpakets 2 verlaufen und in denen elektrische Leiter 5 zumindest einer elektrischen Wicklung angeordnet sind. Das Statorblechpaket 2 ist gebildet aus einem Stapel von aus Elektroblech hergestellten Lamellen, zwischen denen jeweils eine Isolation zur Vermeidung von Wirbelströmen vorgesehen ist. Die Nuten 3 des Stators 1 sind jeweils zwischen Zähnen 1.1 des Stators 1 gebildet und haben jeweils einen Nutgrund 3.1 und eine dem Nutgrund 3.1 abgewandte schlitzförmige Nutöffnung 3.2. Der Querschnitt der Nutöffnungen 3.2 des Stators 1 ist jeweils verengt, da die Zähne 1.1 des Stators 1 an ihrem dem Nutgrund 3.1 abgewandten Ende jeweils einen auskragenden Zahnkopf 1.2 aufweisen, der schulterförmig in die jeweilige Nut 3 vorsteht.

Die Nutöffnungen 3.2 der Nuten 3 sind jeweils von einem Nutverschlusselement 6 verschlossen, das die elektrischen Leiter 5 innerhalb der jeweiligen Nut 3 hält. Die Nutverschlusselemente 6 umfassen jeweils ein elektrisch isolierendes Trägerelement 6.1 und zumindest ein auf dem Trägerelement 6.1 angeordnetes Abschirmelement 6.2 aus elektrisch leitendem Material. Das Trägerelement 6.1 kann jeweils ein Isolationspapier, insbesondere aus synthetischem aromatischem Polyamidpolymer, oder eine Isolationsfolie oder ein Isolationsband sein. Das beispielsweise im Querschnitt U-förmig ausgebildete Trägerelement 6.1 weist jeweils zwei Schenkel auf, die an gegenüberliegenden Wandungen der jeweiligen Nut 3 anliegen, und hat einen die beiden Schenkel verbindenden Trägerabschnitt, an dem das Abschirmelement 6.2 vorgesehen ist.

Das zumindest eine Abschirmelement 6.2 der Nutverschlusselemente 6 ist auf der den elektrischen Leitern 5 abgewandten Seite des Trägerelementes 6.1 angeordnet und dient dazu, das elektrische Feld zum Rotor der elektrischen Maschine hin abzuschirmen.

Erfindungsgemäß ist das zumindest eine Abschirmelement 6.2 der Nutverschlusselemente 6 eine Beschichtung, eine Lackschicht, eine Folie oder ein Blech. Dabei kann das zumindest eine Abschirmelement 6.2 der Nutverschlusselemente 6 jeweils auf das Trägerelement 6.1 aufgeklebt, aufgeschweißt, auflackiert, aufgespritzt, aufgetropft oder aufgedampft sein.

Nach dem ersten Ausführungsbeispiel wird das zumindest eine Abschirmelement 6.2 in einem ersten Schritt jeweils auf die Nutverschlusselemente 6 aufgebracht. Anschließend werden die fertigen Nutverschlusselemente 6 in einem zweiten Schritt als ein Bauteil in die jeweilige Nut 3 eingeschoben.

Die Nutverschlusselemente 6 werden derart in die Nuten 3 eingesetzt, dass deren Trägerelemente 6.1 jeweils in der zugehörigen Nut 3 unmittelbar unterhalb der Zahnköpfe 1.2 und deren zumindest eines Abschirmelement 6.2 jeweils zumindest abschnittsweise in der schlitzförmigen Nutöffnung 3.2 zwischen den Zahnköpfen 1.2 angeordnet ist. Um nach dem Einbau der Nutverschlusselemente 6 jeweils einen elektrischen Kontakt des zumindest einen Abschirmelementes 6.2 zum Statorblechpaket 2 zu gewährleisten, sind die Abschirmelemente 6.2 beim ersten Ausführungsbeispiel jeweils breiter ausgeführt als die Nutöffnungen 3.2 des Stators 1, so dass die Abschirmelemente 6.2 jeweils über ihre Nutöffnung 3.2 hinaus in den Bereich der Nut 3 unterhalb der jeweiligen Zahnköpfe 1.2 verlaufen und jeweils von den Schultern der Zahnköpfe 1.2 elektrisch kontaktiert werden.

Fig.2 zeigt eine Draufsicht auf eine der Nuten 3 des erfindungsgemäßen Stators nach Fig.1.

Nach dem ersten Ausführungsbeispiel ist auf zumindest einem, beispielsweise auf jedem der Nutverschlusselemente 6 eine Vielzahl von Abschirmelementen 6.2 in axialer Richtung bezüglich der Statorachse 4 hintereinander angeordnet, wobei diese Abschirmelemente 6.2 elektrisch voneinander getrennt und jeweils an wenigstens einer Seite, beispielsweise beidseitig, mit dem Statorblechpaket 2 elektrisch verbunden sind.

Die Abschirmelemente 6.2 des Stators 1 sind nach dem ersten Ausführungsbeispiel jeweils aus Aluminium, Kupfer, Silber oder Gold hergestellt. Der Abstand A zwischen den beispielsweise rechteckförmigen oder quadratischen Abschirmelementen 6.2 beträgt beispielsweise jeweils 0,1 bis 0,9 Millimeter, insbesondere 0,5 Millimeter. Durch diesen geringen Abstand zwischen den Abschirmelementen 6.2 wird trotz der Unterbrechungen zwischen den Abschirmelementen 6.2 noch eine hinreichende Abschirmwirkung erzielt. Die Abschirmelemente 6.2 weisen beispielsweise jeweils eine Dicke zwischen 10 und 100 Mikrometern auf.

Die Nutverschlusselemente 6 ragen beispielsweise in axialer Richtung bezüglich der Statorachse 4 aus ihren Nuten 3 heraus. Dadurch können die Abschirmelemente 6 der Nutverschlusselemente 6 zusätzlich eine abschirmende Wirkung in einem Bereich zwischen einem Wickelkopf des Stators 1 und einem Kurzschlussring des Rotors 7 ausüben, da auf diese Weise eine kapazitive Kopplung zwischen dem Wickelkopf des Stators 1 und dem Kurzschlussring des Rotors 7 verhindert wird.

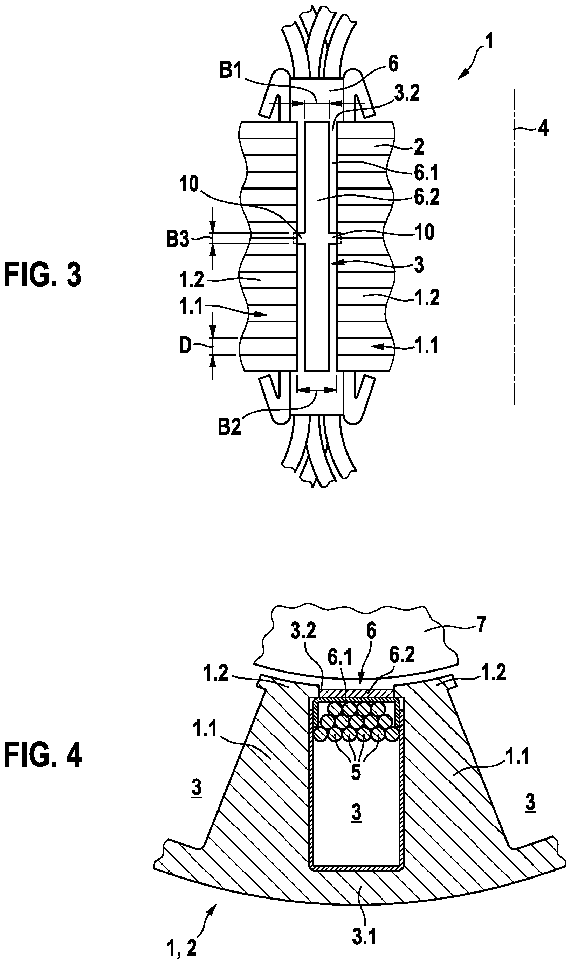

Fig.3 zeigt eine Draufsicht auf eine der Nuten 3 des erfindungsgemäßen Stators nach Fig.1 nach einem zweiten Ausführungsbeispiel.

Das zweite Ausführungsbeispiel unterscheidet sich gegenüber dem ersten Ausführungsbeispiel darin, dass auf zumindest einem der Nutverschlusselemente 6 jeweils ein einziges, streifenförmiges Abschirmelement 6.2 vorgesehen ist, das eine quer zur axialen Richtung gemessene Breite B1 aufweist, die jeweils kleiner ist als die Breite B2 der Nutöffnung 3.2 der zugehörigen Nut 3, und das über zumindest einen, beispielsweise zwei Stege 10 mit dem Statorblechpaket 2 elektrisch verbunden ist. Das Abschirmelement 6.2 ist dadurch ausschließlich über den zumindest einen Steg 10 mit dem Statorblechpaket 2 elektrisch verbunden, wobei der zumindest eine Steg 10 eine in axialer Richtung bezüglich der Statorachse 4 gemessene Breite B3 aufweist, die der Dicke D von ein oder mehreren Lamellen des Statorblechpakets 2 entsprechen kann und beispielsweise im Bereich zwischen 5 Millimetern und 5 Zentimetern liegt. Nach dem zweiten Ausführungsbeispiel sind die Abschirmelemente 6.2 jeweils als durchgehender, rechteckförmiger Streifen ausgeführt, an dem beispielsweise mittig und beidseitig die Stege 10 vorgesehen sind. Der zumindest eine Steg 10 der Abschirmelemente 6.2 ragt wie beim ersten Ausführungsbeispiel unter die Zahnköpfe 1.2 der jeweiligen Nut 3 und wird auf diese Weise an den Schultern der Zahnköpfe 1.2 elektrisch kontaktiert.

Fig.4 zeigt eine Schnittansicht des erfindungsgemäßen Stators nach einem dritten Ausführungsbeispiel. Bei der Vorrichtung nach Fig.4 sind die gegenüber der Vorrichtung nach Fig.1 bis Fig.3 gleichbleibenden oder gleichwirkenden Teile durch die gleichen Bezugszeichen gekennzeichnet.

Das dritte Ausführungsbeispiel unterscheidet sich gegenüber den beiden vorigen Ausführungsbeispielen darin, dass die Abschirmelemente 6.2 an zumindest einem, beispielsweise jedem der Nutverschlusselemente 6 als Lackschicht aus elektrisch leitendem Lack gebildet sind. Dieser elektrisch leitende Lack kann im Gegensatz zu den vorigen Ausführungsbeispielen auch erst nach dem Anordnen der Nutverschlusselemente 6 in der jeweiligen Nut 3 auf die Nutverschlusselemente 6 aufgebracht werden, beispielsweise durch Auftropfen, Auflackieren oder Aufspritzen. Durch das nachträgliche Aufbringen der Lackschicht auf zumindest eines der Nutverschlusselemente 6 können die Abschirmelemente 6.2 das Statorblechpaket 2 an den in der Nutöffnung 3.2 liegenden Seitenflanken der Zahnköpfe 1.2 kontaktieren. Da die Abschirmelemente 6.2 zur Kontaktierung also nicht mehr unter die Schultern der Zahnköpfe 1.2 ragen müssen, wird gegenüber dem ersten und zweiten Ausführungsbeispiel Bauraum eingespart, so dass der sogenannte Nutfüllfaktor in den Nuten 3 des Stators 1 erhöht werden kann.

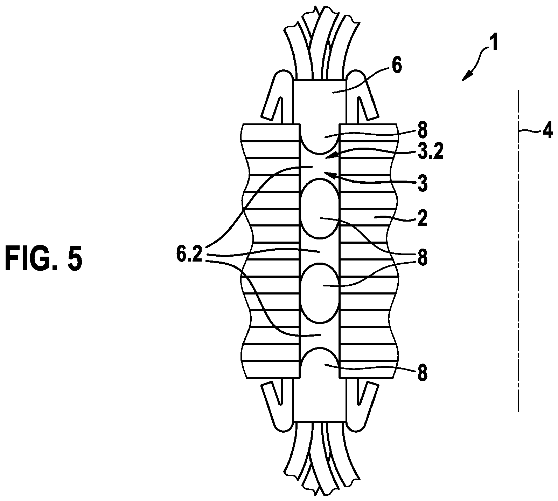

Fig.5 zeigt eine Draufsicht auf eine der Nuten des erfindungsgemäßen Stators nach Fig.4.

Bei dem dritten Ausführungsbeispiel ist wie bei dem ersten Ausführungsbeispiel nach Fig.2 eine Vielzahl von Abschirmelementen 6.2 auf zumindest einem, beispielsweise auf jedem der Nutverschlusselemente 6 in axialer Richtung bezüglich der Statorachse 4 hintereinander angeordnet, wobei diese Abschirmelemente 6.2 elektrisch voneinander getrennt und jeweils an wenigstens einer Seite, beispielsweise beidseitig, mit dem Statorblechpaket 2 elektrisch verbunden sind. Im Unterschied zur Ausführung nach Fig.2 sind die auf einem der Nutverschlusselemente 6 in axialer Richtung hintereinander angeordneten Abschirmelemente 6.2 jedoch aus einem elektrisch leitenden Lack hergestellt. Um diese mehreren, hintereinander angeordneten Abschirmelemente 6.2 auf einem der Nutverschlusselemente 6 zu erzeugen, werden entsprechende Abschnitte 8 auf dem Trägerelement 6.1 des Nutverschlusselementes 6 abgedeckt bzw. maskiert, so dass der in die Nutöffnung 3.2 der jeweiligen Nut 3 eingebrachte Lack diese Abschnitte nicht bedecken kann. Die einzelnen Abschirmelemente 6.2 eines der Nutverschlusselemente 6 sind nach dem dritten Ausführungsbeispiel jeweils hyperboloid-förmig ausgebildet, können aber auch jede andere Form haben.

## Patentansprüche

1. Stator einer elektrischen Maschine, mit einem eine Statorachse (4) aufweisenden Statorblechpaket (2) und mit im Statorblechpaket (2) vorgesehenen Nuten (3), in denen elektrische Leiter (5) einer elektrischen Wicklung angeordnet sind und die jeweils von einem Nutverschlusselement (6) verschlossen sind, das jeweils ein elektrisch isolierendes Trägerelement (6.1) und zumindest ein auf dem Trägerelement (6.1) angeordnetes Abschirmelement (6.2) aus elektrisch leitendem Material umfasst, wobei das zumindest eine Abschirmelement (6.2) eines der Nutverschlusselemente (6) eine Beschichtung, eine Lackschicht, eine Folie oder ein Blech ist, **dadurch gekennzeichnet, dass** auf zumindest einem der Nutverschlusselemente (6) jeweils eine Vielzahl von Abschirmelementen (6.2) in axialer Richtung bezüglich der Statorachse (4) hintereinander angeordnet ist, die elektrisch voneinander getrennt und jeweils an wenigstens einer Seite mit dem Statorblechpaket (2) elektrisch verbunden sind, oder dass auf zumindest einem der Nutverschlusselemente (6) jeweils ein einziges, streifenförmiges Abschirmelement (6.2) vorgesehen ist, das eine quer zur axialen Richtung gemessene Breite (B1) aufweist, die jeweils kleiner ist als die Breite (B2) der Nutöffnung (3.2) der zugehörigen Nut (3), und das über zumindest einen Steg (10) mit dem Statorblechpaket (2) elektrisch verbunden ist.

2. Stator nach Anspruch 1, **dadurch gekennzeichnet, dass** die Nuten (3) jeweils einen Nutgrund (3.1) und eine dem Nutgrund (3.1) abgewandte schlitzförmige Nutöffnung (3.2) aufweisen, wobei das zumindest eine Abschirmelement (6.2) in der Nutöffnung (3.2) oder im Bereich der Nutöffnung (3.2) angeordnet ist.

3. Stator nach einem der vorhergehenden Ansprüche, **dadurch gekennzeichnet, dass** das zumindest eine Abschirmelement (6.2) jeweils auf sein Trägerelement (6.1) aufgeklebt, aufgeschweißt, auflackiert, aufgespritzt, aufgetropft oder aufgedampft ist.

4. Stator nach einem der vorhergehenden Ansprüche, **dadurch gekennzeichnet, dass** das zumindest eine Abschirmelement (6.2) jeweils aus Aluminium, Kupfer, Silber oder Gold hergestellt ist und/oder jeweils als ein Lack ausgebildet ist.

5. Stator nach einem der vorhergehenden Ansprüche, **dadurch gekennzeichnet, dass** das zumindest eine Abschirmelement (6.2) auf der den elektrischen Leitern (5) abgewandten Seite des Trägerelementes (6.1) angeordnet ist.

6. Stator nach einem der vorhergehenden Ansprüche, **dadurch gekennzeichnet, dass** das Trägerelement (6.1) jeweils einen U-förmigen Querschnitt aufweist, der durch jeweils zwei Schenkel und einen die beiden Schenkel verbindenden Trägerabschnitt gebildet ist, wobei das Abschirmelement (6.2) an dem Trägerabschnitt angeordnet ist.

7. Stator nach einem der vorhergehenden Ansprüche, **dadurch gekennzeichnet, dass** die Nutverschlusselemente (6) in axialer Richtung bezüglich der Statorachse (4) aus ihren Nuten (3) vorstehen.

8. Elektrische Maschine mit einem Stator nach einem der vorhergehenden Ansprüche.

## Claims

1. Stator of an electrical machine, having a stator laminated core (2), which has a stator axis (4), and having slots (3) which are provided in the stator laminated core (2), in which electrical conductors (5) of an electrical winding are arranged and which are each closed by a slot closure element (6) which in each case comprises an electrically insulating carrier element (6.1) and at least one shielding element (6.2) which is arranged on the carrier element (6.1) and is composed of electrically conductive material, wherein the at least one shielding element (6.2) of one of the slot closure elements (6) is a coating, a lacquer layer, a film or a metal sheet, **characterized in that** a large number of shielding elements (6.2), which are electrically isolated from one another and are each electrically connected to the stator laminated core (2) on at least one side, are arranged one behind the other in the axial direction with respect to the stator axis (4) on at least one of the slot closure elements (6) in each case, or **in that** a single, strip-like shielding element (6.2) which has a width (B1), which is measured transversely in relation to the axial direction and is in each case smaller than the width (B2) of the slot opening (3.2) of the associated slot (3), and is electrically connected to the stator laminated core (2) by means of at least one web (10) is provided on at least one of the slot closure elements (6) in each case.

2. Stator according to Claim 1, **characterized in that** the slots (3) each have a slot base (3.1) and a slit-like slot opening (3.2) which is averted from the slot base (3.1), wherein the at least one shielding element (6.2) is arranged in the slot opening (3.2) or in the region of the slot opening (3.2).

3. Stator according to either of the preceding claims, **characterized in that** the at least one shielding element (6.2) is adhesively bonded, welded, painted, sprayed, dripped or deposited by evaporation onto its carrier element (6.1) in each case.

4. Stator according to one of the preceding claims, **characterized in that** the at least one shielding element (6.2) is produced from aluminium, copper, silver or gold in each case and/or is in the form of a lacquer in each case.

5. Stator according to one of the preceding claims, **characterized in that** the at least one shielding element (6.2) is arranged on that side of the carrier element (6.1) which is averted from the electrical conductors (5) .

6. Stator according to one of the preceding claims, **characterized in that** the carrier element (6.1) in each case has a U-shaped cross section which is formed by in each case two limbs and one carrier section which connects the two limbs, wherein the shielding element (6.2) is arranged on the carrier section.

7. Stator according to one of the preceding claims, **characterized in that** the slot closure elements (6) protrude from their slots (3) in the axial direction with respect to the stator axis (4).

8. Electrical machine comprising a stator according to one of the preceding claims.

## Revendications

1. Stator d'une machine électrique, comprenant un empilage de tôles de stator (2) qui possède un axe de stator (4) et comprenant des rainures (3) présentes dans l'empilage de tôles de stator (2), dans lesquelles sont disposés des conducteurs électriques (5) d'un enroulement électrique et lesquelles sont respectivement fermées par un élément de fermeture de rainure (6), lequel comporte respectivement un élément porteur (6.1) électriquement isolant et au moins un élément de blindage (6.2) en matériau électriquement conducteur disposé sur l'élément porteur (6.1), l'au moins un élément de blindage (6.2) de l'un des éléments de fermeture de rainure (6) étant un revêtement, une couche de vernis, un film ou une tôle, **caractérisé en ce qu'**une pluralité d'éléments de blindage (6.2) sont respectivement disposés les uns derrière les autres dans la direction axiale en référence à l'axe de stator (4) sur au moins l'un des éléments de fermeture de rainure (6), lesquels sont isolés électriquement les uns des autres et sont reliés électriquement à l'empilage de tôles de stator (2) respectivement au niveau d'au moins un côté, ou **en ce qu'**un élément de blindage (6.2) unique en forme de bande se trouve respectivement sur au moins l'un des éléments de fermeture de rainure (6), lequel présente une largeur (B1) mesurée transversalement par rapport à la direction axiale qui est respectivement plus petite que la largeur (B2) de l'ouverture de rainure (3.2) de la rainure (3) associée, et lequel est relié électriquement à l'empilage de tôles de stator (2) par le biais d'au moins un élément jointif (10).

2. Stator selon la revendication 1, **caractérisé en ce que** les rainures (3) possèdent respectivement un fond de rainure (3.1) et une ouverture de rainure (3.2) en forme de fente à l'opposé du fond de rainure (3.1), l'au moins un élément de blindage (6.2) étant disposé dans l'ouverture de rainure (3.2) ou dans la zone de l'ouverture de rainure (3.2).

3. Stator selon l'une des revendications précédentes, **caractérisé en ce que** l'au moins un élément de blindage (6.2) est respectivement collé, soudé, appliqué par vernissage, pulvérisé, appliqué en gouttes ou appliqué par métallisation sous vide sur son élément porteur (6.1).

4. Stator selon l'une des revendications précédentes, **caractérisé en ce que** l'au moins un élément de blindage (6.2) est respectivement fabriqué en aluminium, en cuivre, en argent ou en or et/ou est respectivement réalisé sous la forme d'un vernis.

5. Stator selon l'une des revendications précédentes, **caractérisé en ce que** l'au moins un élément de blindage (6.2) est disposé sur le côté de l'élément porteur (6.1) à l'opposé des conducteurs électriques (5).

6. Stator selon l'une des revendications précédentes, **caractérisé en ce que** l'élément porteur (6.1) présente respectivement une section transversale en forme de U, laquelle est formée respectivement par deux branches et une portion porteuse qui relie les deux branches, l'élément de blindage (6.2) étant disposé au niveau de la portion porteuse.

7. Stator selon l'une des revendications précédentes, **caractérisé en ce que** les éléments de fermeture de rainure (6) font saillie hors de leurs rainures (3) dans la direction axiale en référence à l'axe de stator (4).

8. Machine électrique comprenant un stator selon l'une des revendications précédentes.
